Europäisches Patentamt

European Patent Office

Office européen des brevets

(11) Publication number:

**0 247 981**
**A2**

## EUROPEAN PATENT APPLICATION

(21) Application number: **87850104.8**

(22) Date of filing: **30.03.87**

(51) Int. Cl.⁴: **G 01 S 13/50**
**F 42 C 13/04**

(30) Priority: **09.04.86 NO 861382**

(43) Date of publication of application:
**02.12.87 Bulletin 87/49**

(84) Designated Contracting States:
**BE DE ES FR GB IT NL SE**

(71) Applicant: **A/S Kongsberg Vapenfabrikk**
**Kirkegaardsveien**
**N-3600 Kongsberg (NO)**

(72) Inventor: **Kjaerstad, Oivind**
**Jorgen Moes gate 51**
**N-3600 Kongsberg (NO)**

(74) Representative: **Rostovanyi, Peter et al**
**AWAPATENT AB Box 5117**
**S-200 71 Malmö (SE)**

(54) **Arrangement in a proximity fuse.**

㉗ Method for measuring distance between two objects, especially in connection with proximity fuses, there being from a first moving object transmitted a modulated signal which is reflected from a second objects, said transmitted modulated signal and said reflected signal being compared for the generation of a doppler signal which is detected as regards amplitude. For the purpose of providing a distance measuring system which suppresses unwanted signals from the reflected object at a larger distance than the desired detonation distance from the target, there is according to the present invention suggested that the transmitted signal comprises a carrier wave having a modulation form and modulation frequency rendering a largest possible steepness for the main lobe (LI), at the same time as the side lobe levels (L2...LI) are made as small as possible for avoiding unwanted detonation in the case of variations in the amplitude of the reflected signal.

FIG.1

## Description

The present invention relates to a method for measuring distance between two objects, especially in connection with proximity fuses, there being from a first moving object transmitted a modulated signal which is reflected from a second object, said transmitted modulated signal and said reflected signal being compared for the generation of a doppler signal, which is detected as regards amplitude.

The present invention is generally applicable for measuring distance between two objects which move relative to each other, but for the present case it will be disclosed in connection with a proximity fuse, but without being limited thereto.

Thus, an object of the present invention is to provide a proximity fuse which suppress undesired signals from objects which are at a larger distance than a desired detonation range. According to the invention, this is achieved by means of a method of the type indicated in the preamble, by letting the transmitted signal comprise a modulated carrier wave, in which the modulation form is chosen such that the auto-correlation function of the transmitted signal is characterized by a high level main lobe and low level side lobes, and having steep main lobe flanks, for thereby providing a doppler signal having an amplitude which varies faster within the predetermined range, for example the detonation range, than would the case be with an unmodulated signal, or a signal having unfavourable modulation form.

In other words, it is contemplated to provide a transmitted signal which can be described as a modulated carrier wave, for example frequency modulated, and which has such a modulation form that the level of the detected signal will not be effective at a substantially larger distance than the desired detonation distance.

Preferably, the carrier waves are than given a modulation form and a modulation frequency which render a detected signal having a largest possible steepness for the main lobe in amplitude - height - function at a distance corresponding to the predetermined one, at the same time as the side lobe levels are made as small as possible in relation to the main lobe for avoiding decision based on the signals of the side lobes.

In the following the invention will be further disclosed, reference being had to the drawings illustrating embodiments in which the present method can be implemented.

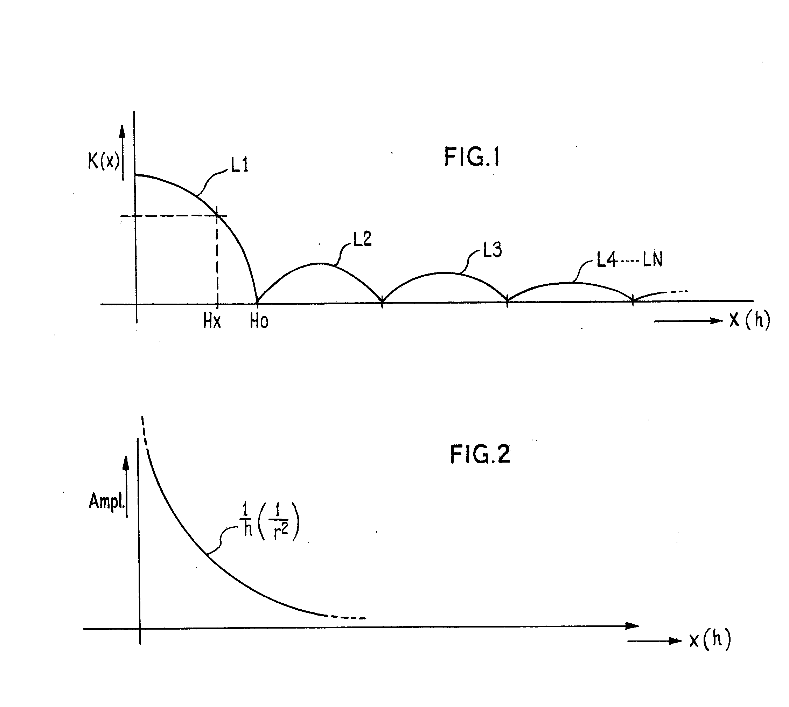

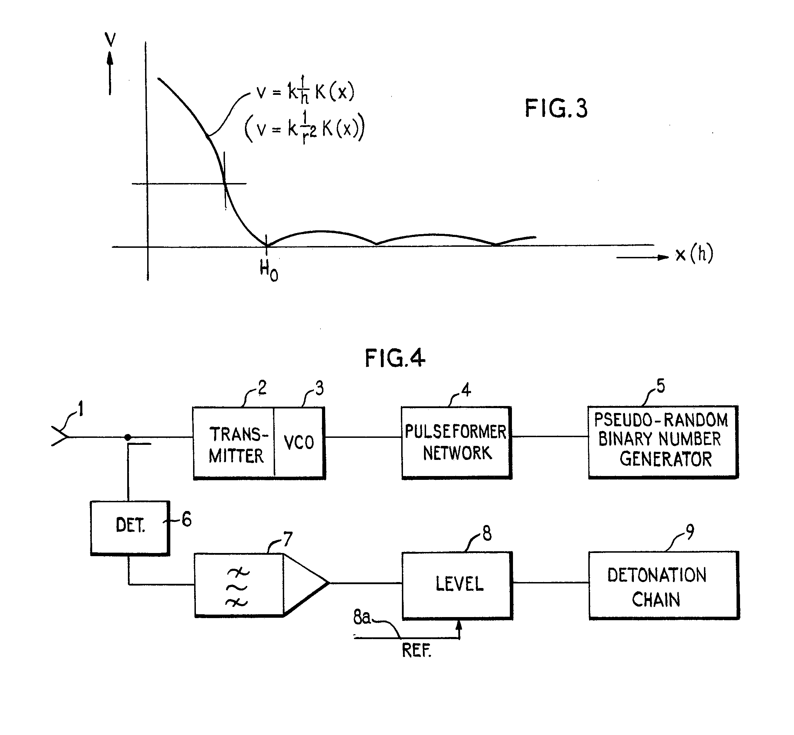

Figure I is a schematical diagram for an implementable auto-correlation function for a modulated signal which can find application in connection with the present invention, i.e. a received signal level when the scattering loss (Figur 2) is not taken into account.

Figure 2 illustrates schematically in the form of a graph, the interconnection between the detected signal amplitude and height/distance when the transmitted signal is not modulated.

Figure 3 illustrates schematically a combination of the graphs according to Figur I and 2, adapted to each other according to the method of the present invention.

Figure 4 is a diagrammatic block diagram for a distance measuring system according to the present invention.

In connection with a proximity fuse comprising a distance measuring system based on measurement of the amplitude of a reflected signal, the received signal amplitude for targets which are large compared to the radiation diagram of the antenna, can be calculated approximately according to the equation:

$$v = k \cdot \frac{1}{h} \qquad (I)$$

in which k is a constant, and h is the distance to the target.

Such targets can for example be large ground areas or surfaces of the sea. For targets which are small compared to the radiation diagram of the antenna, for example a flying object at a large distance, the signal amplitude can be proximated according to the equation:

$$v = k \cdot \frac{1}{r^2} \qquad (2)$$

When the proximity fuse approaches an object and this constitutes a large aeroplane body, the last quoted equation will merge into the first equation, and said two equation can therefore constitute the limit cases of what can be expected in practice.

In the equations the designations are

v = reflected signal amplitude = reflected signal

h = height above the target (surface target)

r = distance to target (target having limited extension)

k = constant

If the transmitter of the proximity fuse is modulated, the two above stated functions will take the following forms:

$$v = k \cdot \frac{1}{h} \ K(h) \qquad (3)$$

$$\text{or} \quad v = k \cdot \frac{1}{r^2} \ K(r) \qquad (4)$$

in which the function K will depend upon the shape of the modulation signal.

The functions K(h) and K(r) are illustrated generally as the function K(x) i Figure I. If the modulated signal is a periodic function, then also K(x) will become a periodic function.

In Figure 2 the above discussed first equation is illustrated diagrammaticly, the amplitude value increasing with decreasing distance between the two objects, and decreasing asymptotically towards zero upon increasing distance between the objects.

What one tries to achieve according to the invention, is that the proximity fuse should not detonate before the proximity switch has come so close to the target that spurious signals do not provide unwanted detonation. Related to the graphs of Figure I it may be desired to position the detornation height or the distance, at the point designated $H_x$, the modulation form and the modulation frequency of the transmitted signal being chosen such that the steepness of $x = h_x$ is as large as possible, and then being present on the main lobe LI, at the same time as the side lobes L2, L3,...LN of the function have so small values that they will not detonate the proximity switch at distances larger that $H_0$ which is the zero point of the main lobe.

The transmitted signal is given a modulation form which renders an auto-correlation of the type which is illustrated in Figure I, and which together with the amplitude course of the reflected signal which is a function of the distance between the two objects and is illustrated in Figure 2, renders a total amplitude/distance course of the type which is illustrated in Figure 3, the graph $v = k.\cdot\frac{1}{h}|K(x)|$ or $v = k.^1/_2|K(x)|$ to the left of the point $H_0$ being given a very marked increasing and higher value in the area of a given distance from the target, i.e. after the proximity switch has reached within the range of detonation.

By an appropriate choice of the modulation form, the point $H_0$ may be fixed at approximately I5 m, and the denonation distance can then be fixed at approximately I0 m, a fact which corresponds to the steepest part of the graph v in Figure 3.

In figure 4 there is illustrated a diagrammatic block diagram for an embodiment of an electronic distance measuring device in a proximity switch. In Figure 4, the reference numeral I designates a combined transmitter and receiver antenna, 2 designates a transmitter, 3 a voltage controlled oscillator, 4 a pulse shaping network, and 5 a peseudo random binary number generator.·

Further, there is in Figure 4 illustrated a detector 6, a combined doppler frequency filter and amplifier 7, as well as a level detector 8 and a detonation chain 9.

To the level detector there is connected a reference threshold 8a.

Via the antenna I the transmitter 2 transmits a carrier wave having a given frequency, and this signal is reflected from an object which the proximity switch approaches. The reflected signal is detected by the antenna and is together with the transmitted signal transferred, although delayed in time corresponding to the lenght of the reflection, to the detector 6, wherein the mixed signals are filtered and amplified and passed on to the level detector 8, wherein the level is detected in relation to the reference 8a for possibly enabling the detonation chain 9.

By means of various degrees and shapes of modulation of the transmitted carrier wave, for example by means of the voltage controlled oscillator 3, it is possible to provide that function which is illustrated in Figure I. The various forms and degrees of modulation can be provided in the pulse shaping network 4, which for example can be controlled by the pseudo random binary number generator 5. A possible modulation form is thus the use of a pseudo random binary number sequence for the modulation of the voltage controlled oscillator 3, illustrated in Figure 4. By using a frequency modulated transmitter in this way, it is possible to suppress signals from

a larger distance $H_x$ than the desired detonation distance, as this is sought illustrated in Figure 3.

It is to be understood that the pulse shaping network can bring forth triangular pulses, rectangular pulses and/or randomly shaped signal levels for the forming of the necessary degree and shape of the modulation of the transmitted signal. The main object is that the carrier wave is given a modulation form and modulation frequency rendering a largest possible steepness for the main lobe in the amplitude-height function, at the same time as the side lobes in the amplitude-height function is made as small as possible to make possible a largest possible dynamic range in the received signal without detonation at unwanted height.

## Claims

I. Method for measuring distance between two objects, especially in connection with proximity fuses, there being from a first moving object transmitted a modulated signal which is reflected from a second object, said transmitted modulated signal and said reflected signal being compared for the generation of a doppler signal which is detected as regards amplitude, **characterized in** that the carrier wave is given a modulation form and modulation frequency rendering largest possible steepness for the auto-correlation function of the main lobe (LI) in the amplitude-height function, at the same time as the side lobe levels (L2....LN) in the amplitude-height function are made as small as possible to avoid detonation at an unwanted distance in the case of variations in the amplitude of the reflected signal.

2. Method as claimed in claim I, **characterized in** that the transmitted carrier wave is modulated by means of a pseudo random binary number sequence (5) for modulation by a voltage controlled oscillator (2, 3).

3. Method as claimed in claim I and 2, **characterized in** that the modulated signal which is generated in a pulse shaping network (4), comprises triangular pulses, rectangular pulses and/or randomly shaped signal levels.

FIG.1

$K(x)$

L1

L2

L3

L4----LN

Hx   Ho

X (h)

FIG.2

Ampl.

$\frac{1}{h}\left(\frac{1}{r^2}\right)$

x(h)

FIG.3

$$v = k\frac{1}{h}K(x)$$

$$\left(v = k\frac{1}{r^2}K(x)\right)$$

V

$H_0$

x (h)

FIG.4

| | TRANS-MITTER | VCO | | PULSE FORMER NETWORK | | PSEUDO-RANDOM BINARY NUMBER GENERATOR |

1

2   3   4   5

DET.   6

7

≋   ≋

LEVEL   8

8a

REF.

DETONATION CHAIN   9